# EUROPEAN PATENT APPLICATION

(11) **EP 3 133 506 A1**
(43) Date of publication of application: **22.02.2017**
(21) Application number: 15195838.6
(22) Date of filing: 23.11.2015
(51) Int. Cl.: G06F 17/30

(54) **METHOD FOR ASSOCIATING MULTIMEDIA CONTENT TO A QR CODE, MANAGEMENT SYSTEM FOR ASSOCIATING QR CODES TO MULTIMEDIA CONTENT AND USING THE MULTIMEDIA CONTENT ASSOCIATED TO QR CODES**

(30) Priority: 18.08.2015 IT UB20153156
(71) Applicant: Maccarini, Marzio, 20126 Milano (IT); Bermone, Giacomo Alberto, 20122 Milano (IT)
(72) Inventor: Maccarini, Marzio, 20126 Milano (IT); Bermone, Giacomo Alberto, 20122 Milano (IT)
(74) Representative: De Bortoli, Tiziano

(57) **Abstract**

A method for associating multimedia content to a QR code and using said multimedia content, the method comprising: - a step of generating a QR code, wherein there are included the steps of: A - generating a unique alphanumeric sequence; B - generating a password; C - generating a QR code of said alphanumeric sequence and said password; D - associating said QR code to a product; - a step of associating a multimedia content, wherein there are included the steps of: E - decoding said QR code associated to said product; F - inserting said unique alphanumeric sequence and said password, as retrieved from the previous decoding; G - selecting a multimedia content; H - associating said multimedia content to said QR code; - a step of using a multimedia content, wherein there are included the steps of: I - decoding said QR code associated to said product and to said multimedia content; L - on the basis of said decoding, using said multimedia content associated with said QR code.

## Description

### Field of the invention

The present invention relates to a method for associating multimedia content (such as images, video or a combination thereof, etc.) to a QR code, and to a management system for associating QR codes to multimedia content and use the multimedia content previously associated with QR codes.

### Prior art

QR (from the initials of the English term *Quick Response*) codes are two-dimensional bar codes. They are represented as a square matrix composed of black regions spaced out by white spaces. A QR code stores coded information: it can represent up to 7089 numeric characters or 4296 alphanumeric characters.

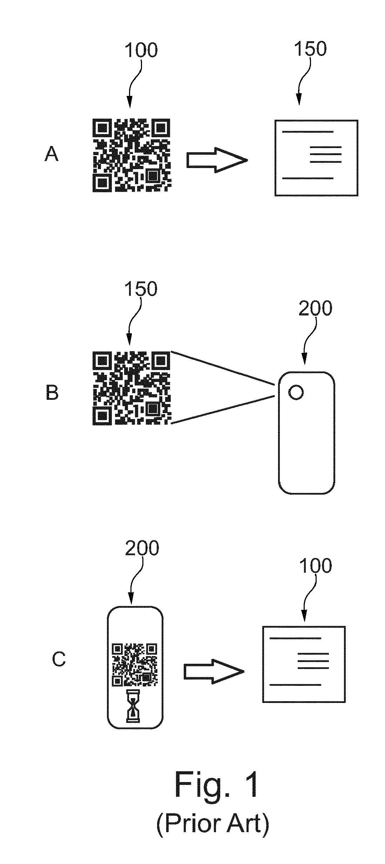

Figure 1 shows a known solution regarding a possible usage cycle of a QR code. The coding of information as QR code occurs by means of a dedicated software running on a computer. As depicted in step A, from an information 100 the QR code 150 encoding it is obtained.

Decoding a QR code occurs with execution of steps B and C.

During step B, a user scans the QR code 150 with the camera of a smartphone, tablet or similar device.

In step C, a software loaded on smartphone 200 processes the scanned QR code 150 to decode it, so that in this way the user obtains information 100.

In the usage flow of a QR code, the following operations are carried out: determining a content to be released; encoding the selected content by generating a corresponding QR code; the previously generated QR code is imprinted on the selected means (i.e. a product packaging, or the screen of a smartphone); using a suitable device, the QR code is decoded to gain access to its contents.

For example, producers of foodstuffs may disclose the ingredients used. According to the flow of operations described above, the manufacturer defines the list of ingredients of the relevant product; encodes the cited list generating a corresponding QR code; imprints the QR code on the packages of the products concerned. A user decodes the QR code imprinted on the package, then retrieves the list of ingredients for that product.

An important feature of QR codes is their static nature, once determined, the content to be encoded remains such over time. This configuration ensures reliability of a QR code, but at the same time does not guarantee flexibility: a content remains such even if it has no longer meaning.

In order to overcome this limitation, some developers have created dynamic QR codes. To maintain the existing technology standards of QR codes, dynamic QR codes are nothing but a link to a website address. The content on the website is editable as desired, thus the QR code is made dynamic in the sense that it always encodes the same information, i.e. the URL of a website, but the contents accessed by a user can be modified freely. In this context, a user decodes a QR code, gets an Internet address to access to, gets the information of interest by visiting the relevant website.

The wide spreading of smartphones has stimulated the development of QR codes, in fact they are widely used in every sector.

### Summary

The applicants have realized that the known solutions do not provide sufficiently flexible and safe ways to use QR codes.

Moreover QR codes, because of their nature, are intended to provide information with no possibility of distinction between users.

A first object of the present invention is that of overcoming the drawbacks of known solutions in a simple and cost-effective manner.

The inventive idea underlying the present invention is that of making a QR code hybrid, in other words taking advantage of the technological features already consolidated in terms of encoding and decoding, and also enabling users to associate a QR code to a respective multimedia content of interest.

In general, a method according to the present invention for associating multimedia content to a QR code and using said multimedia content comprises:
- a step of generating a QR code, wherein there are included the steps of:
   A - generating a unique alphanumeric sequence;
   B - generating a password;
   C - generating a QR code of said alphanumeric sequence and said password;
   D - associating said QR code to a product;
- a step of associating a multimedia content, wherein there are included the steps of:
   E - decoding said QR code associated to said product;
   F - inserting said unique alphanumeric sequence and said password, retrieved from the previous decoding;
   G - selecting a multimedia content;
   H - associating said multimedia content to said QR code;
- a step of using a multimedia content, wherein there are included the steps of:
   I - decoding said QR code associated to said product and to said multimedia content;
   L - on the basis of said decoding, using said multimedia content associated with said QR code.

Further advantageous technical features are recited in the dependent claims.

### Brief description of the drawings.

Figure 1 schematically shows the usage cycle of a QR code according to the prior art;

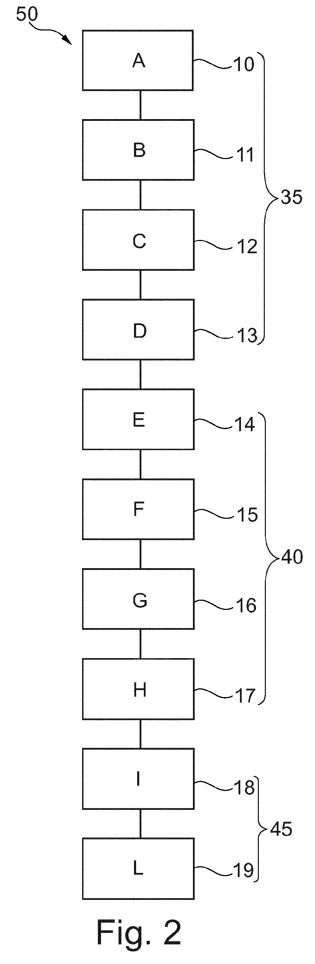

figure 2 shows a block diagram representative of operations carried out according to a method;
figure 3 schematically shows an example of association and use of a multimedia to a QR code according to the present invention.

### Detailed description

Figure 1 shows a block diagram 50 of the main steps of a method for associating multimedia content to a QR code and using said multimedia content.

It is noted that the block diagram is divided into three main groups: group 35 comprises blocks 10, 11, 12 and 13; group 40 comprises blocks 14, 15, 16 and 17; group 45 comprises blocks 18 and 19.

Group 35 indicates the step of generating a QR code, group 40 indicates the step of associating a multimedia content, group 45 indicates the step of using a multimedia content.

In detail, in the blocks as depicted, the following operations are carried out.

Block 10 represents the step in which a unique alphanumeric sequence is generated. According to one embodiment, the alphanumeric sequence may consist of international alphabet letters (A to Z) and numbers from 0 to 9. Therefore, such an alphanumeric sequence may consist of 26 possible letters, i.e. all the letters of the alphabet, and 10 possible numbers, i.e. 26 + 10 = 36 possible characters. This configuration is particularly advantageous because, by choosing a 10 character code, it is possible to get about 3 x 10¹⁵ different codes. Therefore, every alphanumeric sequence generated is different from another.

Afterwards, it goes further with block 11 in which a password is generated to be associated to the unique alphanumeric sequence as generated previously. The password is generated according to per se known methods, for example by generating a pseudorandom number.

In block 12, the QR code of the alphanumeric sequence and of the password is generated. According to one embodiment, the unique alphanumeric sequence is combined with the password and the string thus generated is encoded. The unique alphanumeric sequence and the password are appropriately separated to allow their separate understanding in the decoding step.

In addition, the unique alphanumeric sequence allows creating a unique association between a QR code and the relevant associated product. In other words, a 1 to 1 relation is generated between a QR code and a certain object intended to be associated.

In block 13, the QR code is associated to a product. According to one embodiment, this operation is carried out physically, i.e. the QR code is imprinted on a portion of the product and/or of its package. According to one embodiment, such an operation is also tracked in a database. The generated QR code is associated to a unique product key, such as its bar code, or alternatively to its identification code.

Block 13 ends step 35 of generation of a QR code.

The code generation step 35 is typically performed by a service provider for associating and using multimedia contents of a QR code.

Then there is block 14, which begins the step 40 of associating a multimedia content to the generated QR code. This step is typically performed by a user of the service operated by the provider, for the benefit of a consumer who uses the multimedia content selected by the user and made available by the provider. Therefore, according to block 14, the QR code associated to the available product is decoded. Decoding the QR code provides the user with at least the following two pieces of information: the unique alphanumeric sequence generated in block 10 and the password generated in block 11. The decoding takes place via the user's smartphone. In fact, the user puts the smartphone close to the QR code on the product package, acquires an image thereof and, by means of a dedicated software, decodes the QR code to get the information mentioned. Thus, on the display of his smartphone or tablet, the user views the unique alphanumeric sequence and the password.

Then, there is block 15 in which the user enters the unique alphanumeric sequence and the password retrieved from the decoding as carried out previously. According to one embodiment, the user can enter said information on a dedicated web service managed by the service provider. In practice, the provider offers a web portal to which the user accesses and where he enters the decoded information to associate the QR code to the product of interest. According to one embodiment, the user knows the URL of the web portal as provided by the service provider, for example because it is imprinted on the product package. According to an alternative embodiment, the QR code also encodes the URL of the web portal. Therefore, in the decoding which takes place in block 14, the user in addition to said information also gets the URL to be accessed to associate the multimedia content.

Then, there is block 16 where the user selects the multimedia content. In this respect, it is noted that the multimedia content may be an image, sound, video, image with a playing sound, or the like.

Then, there is block 17 in which, after the selection of the multimedia content, the latter is actually associated to the QR code. Block 17 ends the step of associating the QR code to the multimedia content as selected by the user. According to one embodiment, the step ends with a further operation carried out by the service provider and transparent to the user: the associated QR code is marked as used. This ensures the uniqueness between QR code, multimedia content and relevant associated product. In one embodiment, this operation is carried out by the service provider, in particular on the server of the service provider, when the user enters the password.

Typically, the steps of generating 35, associating 40 and using 45 occur in temporal progression; thus, the generation step 35 takes place first, the association step 40 takes place next and finally the using step 45 takes place lastly.

Afterwards, block 18 is executed which indicates the start of the using step 45. In this block, the QR code associated with the product and with the multimedia content as previously uploaded is decoded. According to one embodiment, the consumer puts his smartphone close to the QR code imprinted on the product and captures an image thereof to decode it.

After this operation, block 19 is executed, indicating the use of the multimedia content based on the decoding as performed. In one embodiment, in order to use the multimedia content associated to the QR code, the password that the consumer retrieves during the decoding the QR code is used. Therefore in one embodiment, the consumer with his smartphone captures an image of the QR code, decodes it and gets the password generated in step 11; he gains access to the dedicated web service managed by the service provider which, similarly to the embodiments as described before, may be the web portal as provided by the service provider himself, and enters the password obtained from the decoding as previously carried out to use the associated multimedia content.

It is noted that, according to the present invention, a static QR code is generated, which can then be edited by anonymous consumers. This procedure can also be applied for a multitude of identical products (e.g. for a plurality of shirts of a same lot).

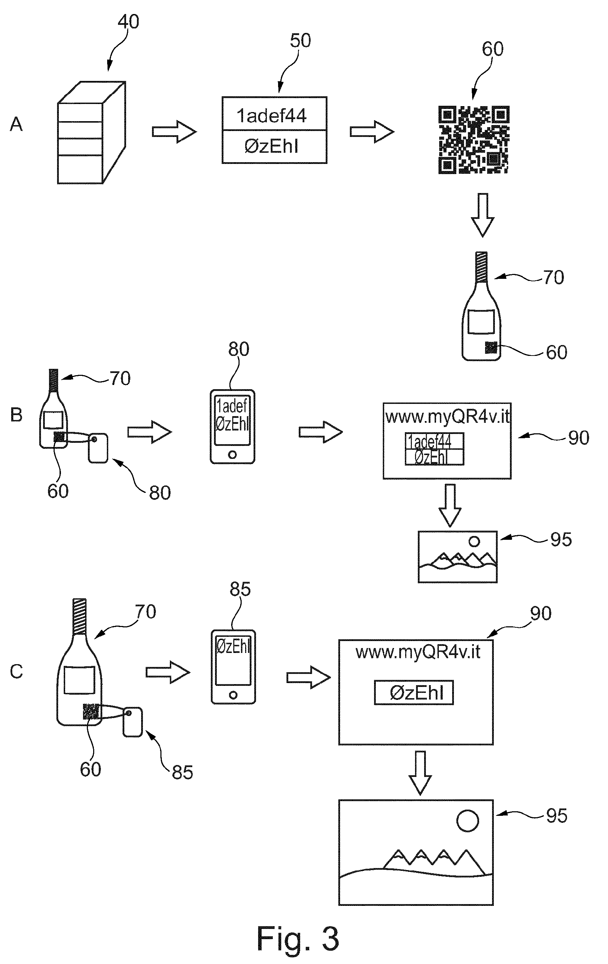

Figure 3 shows an example of generating a QR code (in part A of the figure), of association of a multimedia content to said code (in part B of the figure), and of use of the associated multimedia content (in part C of the figure).

In the example as depicted, the following conditions are supposed: the product is a bottle 70; the multimedia content is an image 95; the service provider is equipped with a server 40 with which he manages the generation and association operations; the user is equipped with a first smartphone 80 with which he carries out the association operations; the consumer is equipped with a second smartphone 80 with which he uses the multimedia content associated by the user.

As in part A of the figure, the service provider generates a unique alphanumeric sequence and a password encapsulated in information 50. Thereafter, he encodes such an information thus obtaining the QR code 60. Thereafter, the QR code 60 is associated to bottle 70. This operation is carried out by imprinting the QR code 60 on bottle 70 and creating a table in a database on server 40 which associates the QR code 60 to the bottle 70. Moreover, such a QR code 60 is marked as "free", i.e. it indicates that a multimedia content may be associated to it.

Part B of the figure shows the operations of associating a multimedia content. A user buys bottle 60 and, in order to associate a multimedia content he likes, he acquires an image of code 60. He decodes the code itself and obtains information 50 (i.e. the alphanumeric sequence and the password). Thereafter, he reaches the web service offered by the provider and during the upload of the multimedia content, he enters the decoded information 50. The server checks the state of that QR code, the outcome of this check makes it possible to establish that that specific QR code is "free", therefore it allows the association of the multimedia content. In fact, the user can proceed by uploading image 95, thanks to the web service offered by the provider. Following this operation, the database on server 40 is updated, marking the QR code 50 as "associated" and linking the associated image to it.

As depicted in part C of figure 3, the consumer can view the image 95 linked to the QR code 60. In this sense, the consumer receives bottle 70, acquires an image of the QR code 60 via his smartphone 85. He decodes the QR code 60 and obtains information 50. He reaches the web service offered by the provider, enters information 50. Server 40 retrieves image 95 from its database, wherein the image 95 is proposed to the consumer himself.

The present invention further relates to a management server 40 comprising:
- communication means adapted to communicate by means of a public communication network, particularly the Internet;
- memory means configured to store a management program;
- a processor connected to said communication means and to said memory means adapted to execute said program;
   wherein said program comprises code which when run by said processor:
- generates a unique alphanumeric sequence;
- generates a password;
- generates a QR code of said alphanumeric sequence and said password;
- associates said QR code to a product;
- associates a multimedia content.

Another aspect of the present invention relates to an electronic user device comprising:
communication means adapted to communicate by means of a public communication network, particularly the Internet;
memory means configured to store a program;
at least one camera;
a processor connected to said communication means and to said memory means adapted to execute said program;
wherein said program comprises code which when run by said processor:
   stores a QR code acquired by means of said camera;
   decodes said QR code;
   obtains access information to associate a multimedia content in user mode;
   or
   obtains access information to use a multimedia content in consumer mode.

Finally, a further aspect of the present invention relates to a system for associating and making use of multimedia content, comprising:
- at least one server according to the above description;
- one or more electronic user devices according to the above description;
- a public information network, particularly the Internet;
wherein said server and said devices communicate by means of said network to enable the users associated with the respective electronic devices to associate and use multimedia content.

## Claims

1. A method for associating multimedia content to a QR code and using said multimedia content, the method comprising:
- a step of generating a QR code, wherein there are included the steps of:
A - generating a unique alphanumeric sequence;
B - generating a password;
C - generating a QR code of said alphanumeric sequence and said password;
D - associating said QR code to a product;
- a step of associating a multimedia content, wherein there are included the steps of:
E - decoding said QR code associated to said product;
F - inserting said unique alphanumeric sequence and said password, as retrieved from the previous decoding;
G - selecting a multimedia content;
H - associating said multimedia content to said QR code;
- a step of using a multimedia content, wherein there are included the steps of:
I - decoding said QR code associated with said product and with said multimedia content;
L - on the basis of said decoding, using said multimedia content as associated to said QR code.

2. A method according to claim 1, wherein said step of generating a QR code is performed by a service provider providing the service of associating and using multimedia contents of a QR code; said step of associating being performed by a user of said service; said step of using being performed by a consumer of said service.

3. A method according to any one of the preceding claims, wherein the execution of said step F further provides marking said QR code associated to said product as used.

4. A method according to any one of the preceding claims, wherein the association of the multimedia content as executed in step H is carried out by means of a dedicated web service managed by said service provider.

5. A method according to any one of the preceding claims, wherein the decoding as executed in step I indicates access credentials to gain access to a dedicated web service managed by said service provider to use the multimedia content associated with the QR code.

6. A method according to any one of the preceding claims, wherein said step of associating comprises a preliminary step of registering said user, in which his electronic identity is inventoried and generated.

7. A method according to any one of the preceding claims, wherein said step D further comprises impressing said QR code on a portion of said product and/or on a package of said product.

8. A management server comprising:
- communication means adapted to communicate by means of a public communication network, particularly the Internet;
- memory means configured to store a management program;
- a processor connected to said communication means and to said memory means adapted to execute said program;
wherein said program comprises code which when run by said processor:
- generates a unique alphanumeric sequence;
- generates a password;
- generates a QR code of said alphanumeric sequence and said password;
- associates said QR code to a product;
- associates a multimedia content.

9. An electronic user device comprising:
- communication means adapted to communicate by means of a public communication network, particularly the Internet;
- memory means configured to store a program;
- at least one camera;
- a processor connected to said communication means and to said memory means adapted to execute said program;
wherein said program comprises code which when run by said processor:
- stores a QR code acquired by means of said camera;
- decodes said QR code;
- obtains access information to associate a multimedia content in user mode;
or
- obtains access information to use a multimedia content in consumer mode.

10. A system for associating and using multimedia contents comprising:
- at least one server according to claim 8;
- one or more electronic user devices according to claim 9;
- a public information network, particularly the Internet;
wherein said server and said device communicate by means of said network to enable the users associated with the respective electronic devices to associate and use multimedia content.
